# EUROPÄISCHE PATENTSCHRIFT

(11) **EP 3 714 504 B1**
(45) Veröffentlichungstag und Bekanntmachung des Hinweises auf die Patenterteilung: **21.08.2024**
(21) Anmeldenummer: 18789352.4
(22) Anmeldetag: 15.10.2018
(51) Int. Cl.: H01M 8/04291, H01M 8/1004, H01M 8/1007, H01M 8/1067, H01M 8/1053, H01M 8/1044, H01M 8/1041, H01M 8/1018

(54) **BRENNSTOFFZELLE MIT VARIABLER WASSERPERMEABILITÄT**
FUEL CELL HAVING A VARIABLE WATER PERMEABILITY
PILE À COMBUSTIBLE AVEC PERMÉABILITÉ À L'EAU VARIABLE

(30) Priorität: 20.11.2017 DE 102017220669
(43) Veröffentlichungstag der Anmeldung: 30.09.2020
(73) Patentinhaber: Robert Bosch GmbH, 70442 Stuttgart (DE)
(72) Erfinder: HELLMANN, Mark, 70825 Korntal (DE); SCHOENBAUER, Stefan, 71254 Ditzingen (DE)
(86) Internationale Anmeldenummer: PCT/EP2018/078024
(87) Internationale Veröffentlichungsnummer: WO 2019/096512

(56) Entgegenhaltungen:
- EP-A1- 2 701 226
- JP-A- 2003 173 798
- JP-A- 2007 123 122

## Beschreibung

Die vorliegende Erfindung betrifft eine Brennstoffzelle nach dem Oberbegriff des unabhängigen Vorrichtungsanspruchs.

### Stand der Technik

Brennstoffzellen, bspw. PEM-Brennstoffzellen, stellen eine attraktive Technologie für eine CO2-freie Energiewirtschaft dar. Brennstoffzellen weisen eine Membran auf, die protonenleitend ist. Die Protonenleitfähigkeit der Membran hängt jedoch stark von der Membranfeuchte ab. Eine möglichst hohe Membranfeuchte ist daher für einen stabilen Betrieb der Brennstoffzelle unabdingbar. Allerdings wandern durch den elektroosmotischen Drag neben den Protonen auch Wassermoleküle von der Anode zur Kathode. Gleichzeitig hängt der ohmsche Widerstand der Brennstoffzelle von der Membrandicke ab. Innerhalb der letzten Dekade hat sich die Membrandicke von ca. 100 - 200 µm auf 10 µm verringert. Eine weitere Reduzierung der Membrandicke ist zu erwarten. Mit sinkender Membrandicke steigt auch die Wasserpermeabilität der Membran, was den Effekt der Entfeuchtung der Anode nachteilig begünstigt. Außerdem werden die Brennstoffzellen zumeist überstöchiometrisch betrieben, wobei das sauerstoffhaltige Gasgemisch verdichtet und dabei erwärmt wird, was ebenfalls zur Entfeuchtung der Membran beiträgt. Bekannte Maßnahmen gegen die Entfeuchtung der Membran sind Rezirkulation des Anodengasgemisches und Befeuchtung der Kathodenzuluft mit einem externen Befeuchter.

Die Schrift JP 2003 173798 A offenbart eine Brennstoffzelle, aufweisend einen Anodenraum und einen Kathodenraum und eine lonen-leitfähige Membran, wobei die Dicke der Membran über eine Flussrichtung eines sauerstoffhaltigen Luftgemisches erhöht wird.

Die Offenlegungsschrift EP 2 701 226 A1 offenbart eine Brennstoffzelle mit einer Membran, wobei diese eine wechselnde Zusammensetzung über Ihre Länge aufweist.

Die Schrift JP 2007 123122 A offenbart eine Brennstoffzelle mit einer Membran, wobei diese eine wechselnde Zusammensetzung über Ihre Dicke aufweist.

### Offenbarung der Erfindung

Die vorliegende Erfindung sieht eine Brennstoffzelle mit den Merkmalen des unabhängigen Vorrichtungsanspruches, insbesondere aus dem kennzeichnenden Teil, vor. Weitere Vorteile, Merkmale und Details der Erfindung ergeben sich aus den jeweiligen Unteransprüchen, der Beschreibung und den Zeichnungen. Dabei können Merkmale und Details, die im Zusammenhang mit den einzelnen Ausführungsformen der Erfindung beschrieben sind, selbstverständlich kombiniert werden, sodass bezüglich der Offenbarung zu den einzelnen Erfindungsaspekten stets wechselseitig Bezug genommen wird bzw. werden kann.

Die Erfindung stellt eine Brennstoffzelle bereit, die mit einem Anodenraum zum Bereitstellen eines brennstoffhaltigen Gasgemisches, einem Kathodenraum zum Bereitstellen eines sauerstoffhaltigen Gasgemisches und einer Membran zum Transportieren von Brennstoffionen aus dem Anodenraum zum Kathodenraum ausgebildet ist. Hierzu ist vorgesehen, dass die Membran mit einer gradierten Wasserpermeabilität ausgebildet ist.

Unter "gradierten Wasserpermeabilität" im Sinne der Erfindung wird eine monoton (z. B. steigend oder fallend ausgestaltete) d.h. nicht periodisch veränderliche Wasserpermeabilität verstanden. Die Brennstoffzelle im Sinne der Erfindung kann in einem Stapel mit anderen gleichwertigen Brennstoffzellen zu einem Brennstoffzellensystem, einem sog. Stack zusammengefügt werden. Ein so gebildetes Brennstoffzellensystem kann in mobilen Anwendungen, bspw. bei Kraftfahrzeugen, und in stationären Anwendungen, bspw. als Generator, eingesetzt werden.

Der Erfindungsgedanke liegt in der Verwendung einer Membran, die über der Fläche einen Gradienten der Permeabilität für Wasser aufweist, z. B: eine Membran mit einer gradierten, insbesondere in Flussrichtung des sauerstoffhaltigen Gasgemisches abfallenden, Dicke bzw. Materialstärke oder einer entsprechenden variablen chemischen Zusammensetzung. Durch eine gradierte Wasserpermeabilität der Membran kann ein optimaler Kompromiss aus niedriger mittlerer Membrandicke für niedrige ohmsche Verluste und ausreichend großer Membrandicke am Kathodeneintritt bzw. Anodenaustritt (insbesondere über die geometrische Erstreckung) eingestellt werden. Der Vorteil der Erfindung liegt in einem stabilen Wassermanagement bzw. einer stabilen Wasserbilanz der Brennstoffzelle im Betrieb. Damit sind auch dauerhaft hohe Brennstoffzellenleistungen möglich und die Fortschritte bei der Membrantechnologie (Dickenreduzierung) im realen Betrieb umsetzbar. Zusammenfassend lässt sich feststellen, dass eine Membran mit einer gradierten Wasserpermeabilität eine verbesserte Befeuchtung der Brennstoffzellenanode bzw. des Anodenraums auch bei der Verwendung von sehr dünnen Membranen sicherstellt.

Ferner sieht die Erfindung bei einer Brennstoffzelle vorsehen, dass die Membran in Flussrichtung des sauerstoffhaltigen Gasgemisches gesehen einen Eingangsbereich und einen Betriebsbereich aufweist, wobei im Eingangsbereich zumindest zum Teil eine niedrigere Wasserpermeabilität eingestellt ist als im Betriebsbereich. In Flussrichtung des sauerstoffhaltigen Gasgemisches herrschen am Eingangsbereich der Brennstoffzellenkathode bzw. des Kathodenraumes hohe Temperaturen, die zu einem trockenen Gasgemisch führen können. Die Konzentration des Produktwassers im sauerstoffhaltigen Gasgemisch steigt erst im Laufe des Gasgemisches durch den Kathodenraum. Trockene Luft am Eingang in die Brennstoffzelle kann nachteilig Wasser aus dem Anodenraum entziehen. Gerade im Eingangsbereich ist es daher vorteilhaft, die Wasserpermeabilität zu reduzieren, um eine Diffusion des Wassers aus dem Anodenraum in den Kathodenraum zu verhindern.

Erfindungsgemäß beträgt der Eingangsbereich der Membran in Flussrichtung des sauerstoffhaltigen Gasgemisches gesehen zwischen 1% und 20%, vorzugsweise 1% bis 10%, der Gesamtlänge der Membran beträgt. Überraschenderweise hat die Erfindung erkannt, dass ein sehr schmaler Eingangsbereich mit einer reduzierten Wasserpermeabilität bereits ausreichen kann, um effektiv und zuverlässig einer Austrocknung der Membran auf der Anodenseite zu verhindern, denn dieser Effekt am Eingang in den Kathodenraum am stärksten ist. Vorteilhafterweise kann bereits ein Bereich bis 20% und bei dickeren Membranen sogar bis 10% zuverlässig ein Übergang des Wassers aus dem Anodenraum in den Kathodenraum verhindern. Die Membran müsste daher nur in dem schmalen Eingangsbereich behandelt oder verdickt werden, um eine gleichmäßige Befeuchtung der Membran über die gesamte Länge zu erzielen.

Des Weiteren ist es im Rahmen der Erfindung denkbar, dass die Wasserpermeabilität der Membran in Flussrichtung des sauerstoffhaltigen Gasgemisches gesehen von einem Eingangsbereich zu einem Betriebsbereich monoton oder stufenweise ansteigt. Je nach Herstellungsmethode kann es von Vorteil sein, entweder einer monotone oder eine stufenweise ansteigende Wasserpermeabilität der Membran bereitzustellen. So kann bei einer chemischen Zusammensetzung eine stufenweise Einstellung der Wasserpermeabilität, bspw. durch eine Dotierung, vorteilhaft sein, wohingegen bei einer Schichtbildung eine stufenweise Wasserpermeabilität der Membran von Vorteil sein kann.

Außerdem kann die Erfindung bei einer Brennstoffzelle vorsehen, dass die gradierte Wasserpermeabilität durch eine wechselnde chemische Zusammensetzung der Membran oder durch eine Strukturierung oder Beschichtung mindestens einer Oberfläche der Membran, insbesondere bei einer konstanten Dicke der Membran, bereitgestellt ist. Mithilfe von chemischen Zusätzen oder bestimmten Strukturierungen oder Beschichtungen der Membran kann die Wasserpermeabilität beeinflusst werden. Wenn dabei die Dicke der Membran konstant verbleibt, dann wird der Zusammenbau der Brennstoffzelle durch die gradierte Wasserpermeabilität keinerlei beeinflusst.

Zudem kann bei einer Brennstoffzelle im Sinne der Erfindung vorteilhaft sein, wenn die gradierte Wasserpermeabilität durch eine Änderung der Dicke der Membran, insbesondere bei einer konstanten chemischen Zusammensetzung der Membran, bereitgestellt ist. Somit kann auf eine einfache Weise und kostengünstig die erfindungsgemäße gradierte Wasserpermeabilität realisiert werden.

Ferner kann die Erfindung vorsehen, dass eine Änderung der Dicke der Membran durch eine Schichtbildung hergestellt ist. Mithin kann nicht nur eine einfache, sondern auch eine präzise einstellbare Wasserpermeabilität realisiert werden.

Weiterhin ist es im Rahmen der Erfindung denkbar, dass bei einer Schichtbildung der Membran mehrere Schichten der Membran stoffschlüssig miteinander verbunden sind. Dadurch kann der Vorteil erreicht werden, dass lonenleitfähigkeit der Membran durch die Schichten, ohne Unterbrechung, gewährleistet wird.

Des Weiteren kann die Erfindung vorsehen, dass in die Flussrichtung des sauerstoffhaltigen Gasgemisches gesehen zumindest in einem Eingangsbereich der Membran die Dicke der Membran 20% bis 200%, vorzugsweise 50% bis 200% der Normaldicke der Membran in einem Betriebsbereich beträgt. Mit anderen Worten kann im Eingangsbereich der Membran eine Dicke vorzugsweise bei zum einer doppelten Normaldicke der Membran eingestellt werden. Dadurch kann auf eine einfache Weise zuverlässig ermöglicht werden, dass die Wassermoleküle im Eingangsbereich der Membran nicht aus dem Anodenraum in den Kathodenbereich übergehen.

Außerdem ist es im Rahmen der Erfindung denkbar, dass die lonenleitfähigkeit der Membran an eine Änderung der Wasserpermeabilität der Membran angepasst ist, um einen gleichmäßigen Diffusionswiderstand für die Brennstoffionen durch die Membran über die Gesamtlänge der Membran zu ermöglichen. Dies kann vorteilhafterweise eine gleichmäßige lonenleitfähigkeit über die gesamte Gesamtlänge der Membran sicherstellen.

### Bevorzugte Ausführungsbeispiele:

Die erfindungsgemäße Brennstoffzelle und ihre Weiterbildungen sowie deren Vorteile werden nachfolgend anhand von Zeichnungen näher erläutert. Es zeigen jeweils schematisch:
- Fig. 1: ein schematischer Aufbau einer Brennstoffzelle mit Anodenrezirkulation,
- Fig. 2: eine schematische Darstellung eines Feuchteverlaufes innerhalb einer Brennstoffzelle,
- Fig. 3: eine schematische Darstellung eines Feuchteverlaufes innerhalb einer Brennstoffzelle mit einer bestimmten Membrandicke,
- Fig. 4: eine schematische Darstellung eines Feuchteverlaufes innerhalb einer Brennstoffzelle mit einer in etwa fünffach kleineren Membrandicke als die Membrandicke gemäß der Figur 3, und
- Fig. 5: einen schematischen Aufbau einer erfindungsgemäßen Membran.

In den unterschiedlichen Figuren sind gleiche Teile der Brennstoffzelle 100 stets mit denselben Bezugszeichen versehen, weshalb diese in der Regel nur einmal beschrieben werden.

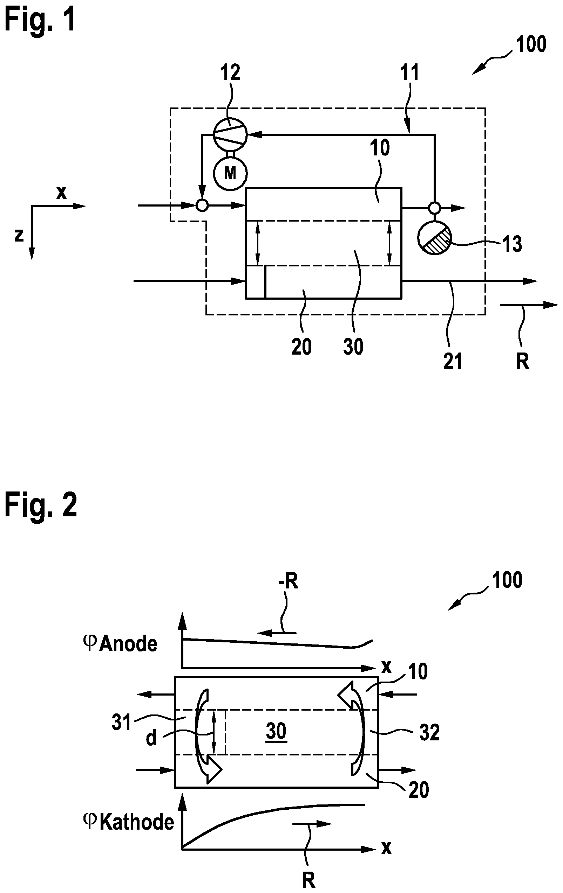

In der Figur 1 ist eine typische Systemtopologie einer Brennstoffzelle 100 abgebildet, die mit einem Anodenraum 10 zum Bereitstellen eines brennstoffhaltigen Gasgemisches, einem Kathodenraum 20 zum Bereitstellen eines sauerstoffhaltigen Gasgemisches und einer Membran 30 zum Transportieren von Brennstoffionen aus dem Anodenraum 10 zum Kathodenraum 20 ausgeführt ist. Das sauerstoffhaltige Gasgemisch für den Kathodenraum 20 der Brennstoffzelle 100 wird zumeist in Form von einfacher Umgebungsluft aus der Umgebung der Brennstoffzelle 100 angesaugt. Das brennstoffhaltige Gasgemisch, bspw. Wasserstoff, wird meistens aus einem Tank in den Anodenraum 10 der Brennstoffzelle 100 bereitgestellt. Für den Transport der Reaktanten zum und vom dem jeweiligen Raum 10, 20 sind entsprechende Leitungen 11, 21 vorgesehen. In der Anodenleitung 11 ist zudem eine Rezirkulationspumpe 12 vorgesehen, die ein unverbrauchtes brennstoffhaltiges Gasgemisch zurück in den Anodenraum 10 schickt. Die Kathodenleitung 21 ist meistens nach außen offen, um unverbrauchte Luft aus dem Kathodenraum 20 abzulassen.

Im Beispiel der Figur 1 wird die Anode im Gleichstrom mit der Kathode betrieben. Die Luft bzw. das sauerstoffhaltige Gasgemisch strömt in den Kathodenraum 20 ein, tauscht Wasserdampf über die Membran 30 mit dem Anodenraum 10 aus und transportiert gleichzeitig das produzierte Wasser in Flussrichtung R des sauerstoffhaltigen Gasgemisches aus dem Kathodenraum 20 und somit aus der Brennstoffzelle 100 ab. Die Feuchte des sauerstoffhaltigen Gasgemisches bzw. der Kathodenluft nimmt also vom Eintritt- zum Austritt zu. In der Anodenleitung 11 wird frisches brennstoffhaltiges Gasgemisch aus dem Tank mit einem rezirkulierten Gasgemisch vor dem Eintritt in den Anodenraum 10 vermischt. In der Anodenleitung 11 wird üblicherweise kein externer Befeuchter verwendet. Das frische brennstoffhaltige Gasgemisch wird trocken aus dem Tank entnommen. Die Feuchte des brennstoffhaltigen Gasgemisches vor dem Eintritt in den Anodenraum 10 hängt daher von der Feuchtemenge ab, die vom Anodenausgang aus zum Anodeneingang rezirkuliert wird. Je dünner die Membran 30 ist, desto kleiner ist der Diffusionswiderstand für Wasser. Dies führt zu einem verstärkten Austausch von Wasser zwischen dem Kathodenraum 20 und dem Anodenraum 10 der Brennstoffzelle 100.

Die Figur 2 zeigt die Anode im Gegenstrombetrieb zur Kathode. Dadurch wird eine innere Wasserzirkulation, wie mit den gebogenen Pfeilen gezeigt ist, gefördert. Diese Wasserzirkulation erhöht die umlaufende Wassermenge und ermöglicht den Betrieb der Brennstoffzelle 100 auch bei Betriebstemperaturen über 60 °C ohne externen Befeuchter. Zusätzlich zu den Strömungsrichtungen sind auch die Verläufe der relativen Feuchte ϕ oben für den Anodenraum 10 (s. ϕ_{Anode}) und unten für den Kathodenraum 20 (s. ϕ_{Kathode}) dargestellt. Die Luft strömt ohne externen Befeuchter trocken in den Kathodenraum 20 ein. Ihre Feuchte steigt durch die Aufnahme des Produktwassers generell an. Am Eintritt in den Kathodenraum 20 ist das Partialdruckgefälle des Wasserdampfes zwischen dem Anodenraum 10 und dem Kathodenraum 20 am größten. Dadurch entzieht die Kathodenluft dem Anodenraum 10 an dieser Stelle Wasser, welches im System nicht zirkuliert werden kann und damit auch nicht zur Befeuchtung des Anodeneintritts zur Verfügung steht. Im stationären Zustand stellt sich ein ausgeglichener Wasserhaushalt der Brennstoffzelle ein.

Mit Simulationsmodellen kann gezeigt werden, dass die Kopplung der Kathoden- und Anodenfeuchteverläufe über den Diffusionswiderstand der Membran 30 großen Einfluss auf den Wasserhaushalt der Brennstoffzelle 100 hat. Die Wasserdurchlässigkeit/Permeabilität ist direkt abhängig vom Diffusionswiderstand der Wassermoleküle durch die Membran 30 und von der Membrandicke d.

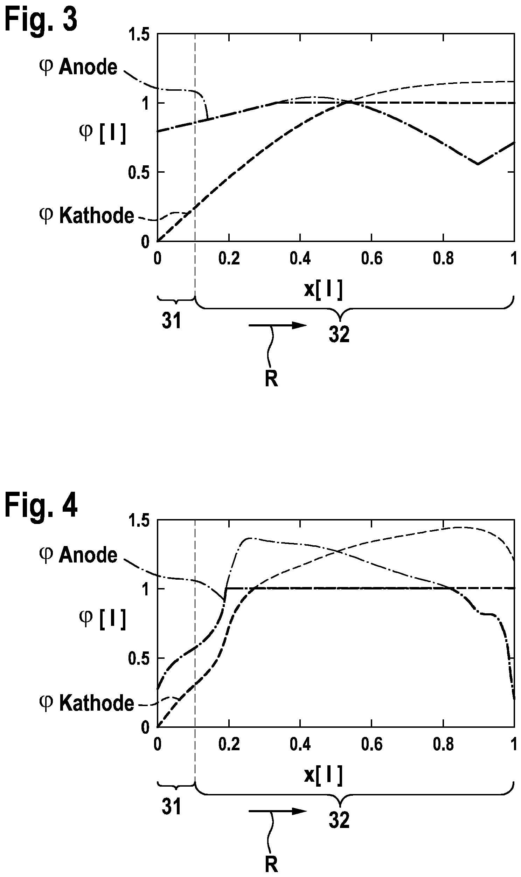

In den Figuren 3 und 4 wird der Wasserhaushalt von zwei Szenarien gezeigt. Im ersten Fall der Figur 3 liegt der Diffusionswiderstand der Membran 30 bei einem bestimmten Wert, der einer bestimmten Membrandicke d entspricht. Im zweiten Fall der Figur 4 wird mit einem, bspw. um den Faktor 5 kleiner gewählten, Diffusionswiderstand für Wassermoleküle durch die Membran 30 simuliert. Die große Reduzierung des Diffusionswiderstands hilft den Effekt der Entfeuchtung der Membran auf der Anodenseite zu veranschaulichen. In der Realität wird die Reduzierung des Diffusionswiderstands ggf. kleiner ausfallen, jedoch dennoch relevant für den Wasserhaushalt innerhalb der Brennstoffzelle 100 sein.

In der Ansicht der Figur 3 ist erkennbar, dass die Kathodenluft bzw. das sauerstoffhaltige Gasgemisch die Kathode in positiver x-Richtung durchströmt. "x=0" entspricht dabei dem Kathodeneintritt und "x=1" - dem Kathodenaustritt, was in der Ansicht der Figur 3 einer Richtung von links nach rechts und gleichzeitig der Flussrichtung R des sauerstoffhaltigen Gasgemisches durch den Kathodenraum 20 entspricht. In dieser Flussrichtung R nimmt auch die Kühlmitteltemperatur zu. Die verdichtete Kathodenluft gelangt erhitzt und ohne externen Befeuchter unbefeuchtet in den Kathodenraum 20 und nimmt schnell Wasser aus dem Anodenraum 10 auf. Am Kathodeneintritt ist der Gradient der Feuchtezunahme in der Kathodenluft am steilsten. Dieser Gradient nimmt in Richtung des Kathodenaustritts immer weiter ab, weil die Dampfpartialdruckdifferenz zum Anodenraum 10 immer kleiner wird. Bei Feuchten über "1" kann flüssiges Wasser austreten. Das brennstoffhaltige Gasgemisch bzw. das Anodengasgemisch durchströmt den Anodenraum 10 in negativer x-Richtung. "x=1" entspricht dabei dem Anodeneintritt und "x=0" - dem Anodenaustritt, was in der Ansicht der Figur 3 der Richtung von rechts nach links entspricht. Zunächst sinkt die relative Feuchte des Anodengasgemisches durch die Erwärmung auf die Stacktemperatur im Bereich von "x=1" ab. Danach steigt die Feuchte auf ein Maximum bei ungefähr "x=0,45" an und sinkt danach wieder ab, weil Wasserdampf in Richtung des sehr trockenen Kathodeneintritts diffundiert.

Im zweiten Fall gemäß der Figur 4 mit signifikant niedrigerem Diffusionswiderstand der Membran 30, bspw. mit einer deutlich kleineren Dicke d als die Membrandicke d gemäß der Figur 3, treten dieselben Effekte auf. Diese wirken jedoch deutlich stärker, wie es aus der Figur 4 ersichtlich ist. Bei "x=0" ist der Gradient der Feuchtezunahme in dem Kathodenraum 20 viel steiler ausgeprägt als im ersten Fall. Dies hat zur Folge, dass der Anodenraum 10, welcher weiterhin im Gegenstrom mit dem brennstoffhaltigen Gasgemisch betrieben wird, weniger Feuchte aufweist als im ersten Fall. Damit hat auch das Anodenrezirkulat einen geringeren Feuchtegehalt, was sich bei "x=1" am Anodeneintritt bemerkbar macht. Auch dort ist der Anodenraum 10 sehr trocken. Durch den geringen Diffusionswiderstand steigt die Feuchte im Anodenraum 10 dazwischen wieder sehr schnell an. Der Feuchteverlauf in der Anode ist im zweiten Fall im Mittel auf einem höheren Niveau als im ersten Fall, jedoch auf Kosten der Homogenität der Feuchte. Letzteres wirkt sich negativ auf eine homogene Stromdichteverteilung in der Brennstoffzelle 100 und damit auch negativ auf eine möglichst hohe Leistungsdichte aus.

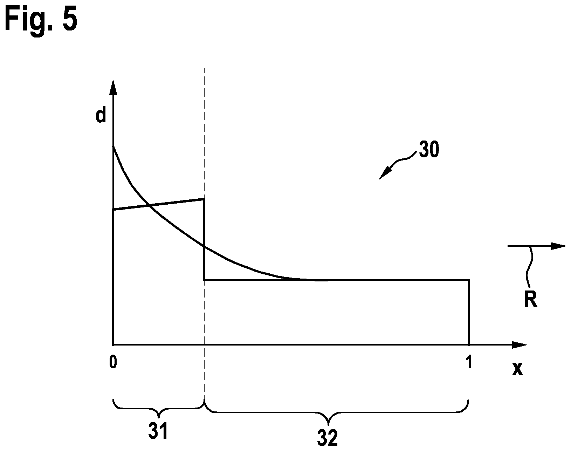

Zur Wiederherstellung der Homogenität der Befeuchtung innerhalb der Brennstoffzelle 10 schlägt die Erfindung vor, den Wasserübertritt am Anodenaustritt (hier z.B. zwischen "0<x<0,1") durch niedrige Wasserpermeabilität der Membran 30 zu verringern, wie dies bspw. anhand der Figur 5 dargestellt ist. Dadurch gibt die Anode weniger Wasser an die Kathode im Kathodeneintrittsbereich ab und es kann mehr Wasser im Anodenpfad rezirkuliert werden. Dies hilft wiederum die Eintrittsfeuchte des Anodengasgemisches zwischen 0,9 <x<1 zu erhöhen.

Im Sinne der Erfindung kann eine gradierte Wasserpermeabilität durch folgende Varianten umgesetzt werden:
i) Die Membran 30 kann so ausgeprägt werden, dass die Permeabilität in Flussrichtung R des sauerstoffhaltigen Gasgemisches gradiert ist. Dies könnte zum Beispiel durch eine wechselnde chemische Zusammensetzung der Membran 30 erreicht werden, die den Diffusionswiderstand für Wasser gradiert. Weiterhin ist es denkbar, dass die Membran 30 an einer oder beiden Oberflächen so gestaltet werden kann, bspw. mithilfe einer Strukturierung oder (z. B. wasserundurchlässigen) Beschichtung, dass die Adsorptions-/Desorptionseigenschaften über der Länge der Membran 30 variieren.

Ferner kann im Rahmen der Erfindung eingestellt werden, dass die lonenleitfähigkeit von der graduierten Wasserpermeabilität unabhängig bleibt und vorzugsweise überall auf der Gesamtfläche der Membran 30 ausreichend hoch ist, um einen möglichst widerstandsfreien Übergang der Brennstoffionen durch die Membran 30 zu ermöglichen.

Des Weiteren kann jedoch die Membran 30 mit einer ebenfalls gradierten lonenleitfähigkeit bereitgestellt werden, um eine gleichmäßige lonenleitfähigkeit über die Gesamtlänge der Membran 30 sicherzustellen.

ii) Eine gradierte Wasserpermeabilität kann weiterhin durch eine gradierte Dicke d der Membran 30 in Flussrichtung R des sauerstoffhaltigen Gasgemisches, bspw. bei gleichem chemischem Membranaufbau, realisiert werden. Die Dicke d der Membran 30 hat einen direkten Einfluss auf den Diffusionswiderstand für Wassermoleküle. Im Bereich von "0<x<0,2", zumindest jedoch "0<x<0,1", sieht die Erfindung vor, dass die Membrandicke d um mindestens 20%, bspw. um 50 % bis zu 200% gegenüber dem restlichen Bereich der Brennstoffzelle 100 erhöht wird. Idealerweise erfolgt die Erhöhung stufenlos. Gleichwohl ist es aber auch denkbar, sodass die partielle Dickenänderung durch Aufeinanderlegen von mehreren Schichten bzw. Lagen der Membran 30 mit konstanter Dicke d erfolgen kann. Weiterhin ist es denkbar, dass die aufeinandergelegten

Membranenschichten zusätzlich miteinander gefügt werden können, z.B. durch Heißverpressen.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

## Patentansprüche

1. Brennstoffzelle (100) mit
einem Anodenraum (10) zum Bereitstellen eines brennstoffhaltigen Gasgemisches, einem Kathodenraum (20) zum Bereitstellen eines sauerstoffhaltigen Gasgemisches und einer Membran (30) zum Transportieren von Brennstoffionen aus dem Anodenraum (10) zum Kathodenraum (20), wobei
die Membran (30) mit einer gradierten Wasserpermeabilität ausgebildet ist; wobei
die Membran (30) in Flussrichtung (R) des sauerstoffhaltigen Gasgemisches gesehen einen Eingangsbereich (31) und einen Betriebsbereich (32) aufweist, wobei im Eingangsbereich (31) zumindest zum Teil eine niedrigere Wasserpermeabilität eingestellt ist als im Betriebsbereich (32),
**dadurch gekennzeichnet, dass** der Eingangsbereich (31) der Membran in Flussrichtung (R) des sauerstoffhaltigen Gasgemisches gesehen zwischen 1% und 20%, vorzugsweise 1% bis 10%, der Gesamtlänge der Membran (30) beträgt.

2. Brennstoffzelle (10) nach Anspruch 1,
**dadurch gekennzeichnet,**
**dass** die Wasserpermeabilität der Membran (30) in Flussrichtung (R) des sauerstoffhaltigen Gasgemisches gesehen von einem Eingangsbereich (31) zu einem Betriebsbereich (32) monoton oder stufenweise ansteigt.

3. Brennstoffzelle (10) nach einem der vorhergehenden Ansprüche,
**dadurch gekennzeichnet,**
**dass** die gradierte Wasserpermeabilität durch eine wechselnde chemische Zusammensetzung der Membran (30) oder durch eine Strukturierung oder Beschichtung mindestens einer Oberfläche der Membran (30), insbesondere bei einer konstanten Dicke (d) der Membran (30), bereitgestellt ist.

4. Brennstoffzelle (10) nach einem der vorhergehenden Ansprüche,
**dadurch gekennzeichnet,**
**dass** die gradierte Wasserpermeabilität durch eine Änderung der Dicke (d) der Membran (30), insbesondere bei einer konstanten chemischen Zusammensetzung der Membran (30), bereitgestellt ist.

5. Brennstoffzelle (10) nach einem der vorhergehenden Ansprüche,
**dadurch gekennzeichnet,**
**dass** eine Änderung der Dicke (d) der Membran (30) durch eine Schichtbildung hergestellt ist.

6. Brennstoffzelle (10) nach dem vorhergehenden Anspruch,
**dadurch gekennzeichnet,**
**dass** bei einer Schichtbildung der Membran (30) mehrere Schichten der Membran (30) stoffschlüssig miteinander verbunden sind.

7. Brennstoffzelle (10) nach einem der vorhergehenden Ansprüche,
**dadurch gekennzeichnet,**
**dass** in die Flussrichtung (R) des sauerstoffhaltigen Gasgemisches gesehen zumindest in einem Eingangsbereich (31) der Membran (30) die Dicke (d) der Membran (30) 20% bis 200%, vorzugsweise 50% bis 200% der Membran (30) in einem Betriebsbereich (32) beträgt.

8. Brennstoffzelle (10) nach einem der vorhergehenden Ansprüche,
**dadurch gekennzeichnet,**
**dass** die lonenleitfähigkeit der Membran (30) an eine Änderung der Wasserpermeabilität der Membran (30) angepasst ist, um einen gleichmäßigen Diffusionswiedertand für die Brennstoffionen durch die Membran (30) über die Gesamtlänge der Membran (30) zu ermöglichen.

## Claims

1. Fuel cell (100) having
an anode chamber (10) for providing a fuel-containing gas mixture, a cathode chamber (20) for providing an oxygen-containing gas mixture, and a membrane (30) for transporting fuel ions from the anode chamber (10) to the cathode chamber (20), wherein
the membrane (30) is formed with a graded water permeability;
wherein
the membrane (30), when seen in the flow direction (R) of the oxygen-containing gas mixture, has an entry region (31) and an operating region (32), wherein a lower water permeability is established in the entry region (31), at least in part, than in the operating region (32),
**characterized in that** the entry region (31) of the membrane, when seen in the flow direction (R) of the oxygen-containing gas mixture, accounts for between 1% and 20%, preferably from 1% to 10%, of the total length of the membrane (30).

2. Fuel cell (10) according to Claim 1,
**characterized in that**
the water permeability of the membrane (30), when seen in the flow direction (R) of the oxygen-containing gas mixture, increases monotonically or stepwise from an entry region (31) to an operating region (32).

3. Fuel cell (10) according to one of the preceding claims,
**characterized in that**
the graded water permeability is provided by a changing chemical composition of the membrane (30) or by a structuring or coating of at least one surface of the membrane (30), in particular with a constant thickness (d) of the membrane (30).

4. Fuel cell (10) according to one of the preceding claims,
**characterized in that**
the graded water permeability is provided by a change in the thickness (d) of the membrane (30), in particular with a constant chemical composition of the membrane (30).

5. Fuel cell (10) according to one of the preceding claims,
**characterized in that**
a change in the thickness (d) of the membrane (30) is produced by a layer formation.

6. Fuel cell (10) according to the preceding claim,
**characterized in that**,
in the case of a layer formation of the membrane (30), multiple layers of the membrane (30) are connected together by a material-bonded connection.

7. Fuel cell (10) according to one of the preceding claims,
**characterized in that**
when seen in the flow direction (R) of the oxygen-containing gas mixture, the thickness (d) of the membrane (30), at least in an entry region (31) of the membrane (30), is from 20% to 200%, preferably from 50% to 200%, of the membrane (30) in an operating region (32).

8. Fuel cell (10) according to one of the preceding claims,
**characterized in that**
the ion conductivity of the membrane (30) is adapted to a change in the water permeability of the membrane (30) in order to permit a uniform diffusion resistance for the fuel ions through the membrane (30) over the entire length of the membrane (30).

## Revendications

1. Pile à combustible (100) avec
une chambre anodique (10) pour la fourniture d'un mélange gazeux contenant du combustible, une chambre cathodique (20) pour la fourniture d'un mélange gazeux contenant de l'oxygène et une membrane (30) pour le transport d'ions de combustible de la chambre anodique (10) vers la chambre cathodique (20),
la membrane (30) étant réalisée avec une perméabilité à l'eau graduée ; la membrane (30), vue dans la direction d'écoulement (R) du mélange gazeux contenant de l'oxygène, présentant une zone d'entrée (31) et une zone de fonctionnement (32), une perméabilité à l'eau plus faible étant réglée au moins en partie dans la zone d'entrée (31) que dans la zone de fonctionnement (32),
**caractérisée en ce que** la zone d'entrée (31) de la membrane, vue dans la direction d'écoulement (R) du mélange gazeux contenant de l'oxygène, représente entre 1 % et 20 %, de préférence 1 % à 10 %, de la longueur totale de la membrane (30).

2. Pile à combustible (10) selon la revendication 1,
**caractérisée en ce que**
la perméabilité à l'eau de la membrane (30), vue dans la direction d'écoulement (R) du mélange gazeux contenant de l'oxygène, augmente de manière monotone ou par paliers d'une zone d'entrée (31) à une zone de fonctionnement (32).

3. Pile à combustible (10) selon l'une quelconque des revendications précédentes,
**caractérisée en ce que**
la perméabilité à l'eau graduée est fournie par une composition chimique variable de la membrane (30) ou par une structuration ou un revêtement d'au moins une surface de la membrane (30), notamment avec une épaisseur constante (d) de la membrane (30).

4. Pile à combustible (10) selon l'une quelconque des revendications précédentes,
**caractérisée en ce que**
la perméabilité à l'eau graduée est fournie par une variation de l'épaisseur (d) de la membrane (30), notamment à une composition chimique constante de la membrane (30).

5. Pile à combustible (10) selon l'une quelconque des revendications précédentes,
**caractérisée en ce**
**qu'**une modification de l'épaisseur (d) de la membrane (30) est produite par une formation de couches.

6. Pile à combustible (10) selon la revendication précédente,
**caractérisée en ce que**
lors d'une formation de couches de la membrane (30), plusieurs couches de la membrane (30) sont reliées entre elles par liaison de matière.

7. Pile à combustible (10) selon l'une quelconque des revendications précédentes,
**caractérisée en ce que**
vue dans la direction d'écoulement (R) du mélange gazeux contenant de l'oxygène, au moins dans une zone d'entrée (31) de la membrane (30), l'épaisseur (d) de la membrane (30) est de 20 % à 200 %, de préférence de 50 % à 200 % de la membrane (30) dans une zone de fonctionnement (32).

8. Pile à combustible (10) selon l'une quelconque des revendications précédentes,
**caractérisée en ce que**
la conductivité ionique de la membrane (30) est adaptée à une variation de la perméabilité à l'eau de la membrane (30) afin de permettre une résistance à la diffusion uniforme pour les ions de combustible à travers la membrane (30) sur toute la longueur de la membrane (30).
